# EUROPEAN PATENT SPECIFICATION

(11) **EP 2 403 277 B1**
(45) Date of publication and mention of the grant of the patent: **14.12.2016**
(21) Application number: 10360030.0
(22) Date of filing: 01.07.2010
(51) Int. Cl.: H04W 4/02, H04W 4/00, G06Q 20/32, H01Q 1/22, H01Q 3/00

(54) **DETECTOR**
DETEKTOR
DÉTECTEUR

(43) Date of publication of application: 04.01.2012
(73) Proprietor: ALCATEL LUCENT, 92100 Boulogne-Billancourt (FR)
(72) Inventor: Claussen, Holger, Co Kidare (IE); Pivit, Florian, Dublin 15 (IE); Kennedy, Irwin O., Londonderry, BT47 6HY (IE); Mullany, Francis J., Dublin 12 (IE)
(74) Representative: Sarup, David Alexander

(56) References cited:
- EP-A1- 1 424 861
- EP-A1- 1 742 170
- WO-A1-2009/113057
- US-A1- 2009 233 583

## Description

### FIELD OF THE INVENTION

The present invention relates to a user equipment identification detector, a method of detecting and identifying user equipment and a computer program product.

### BACKGROUND

Wireless telecommunication systems are known. In such systems, user equipment roam through a wireless telecommunications network. Base stations are provided which support areas of radio coverage. A number of such base stations are provided and are distributed geographically in order to provide a wide area of coverage to user equipment. When user equipment is within an area served by a base station, communication may be established between the user equipment and base station over associated radio links. A base station typically supports a number of sectors within the geographical area of service.

It is desired to enable user equipment to interact with real world objects. Use of user equipment, such as mobile phones, to access interactions with real world objects is particularly attractive since end users are familiar and comfortable with their mobile telephones.

Examples of possible interactions with real world objects include, for example, convenient payment via mobile phone. Payment can be performed by placing a mobile phone or other similar user equipment on a payment area on a shop counter, for example. Furthermore, after successful payment, an SMS receipt of the transaction may be sent to the user equipment.

Further examples of interactions with real world objects may include allowing user equipment to download real world content by touching the content. For example, it may be possible to download a train timetable directly to user equipment by touching user equipment against a relevant ticket machine or timetable at a train station. The download to the user equipment is triggered by placing the phone on the content; for example, a ticket machine at a railway station. Alternatively, it may be possible to send a link to the timetable via SMS message from where it can then be accessed by a user.

Furthermore, user equipment may be used as a keyless entry system for houses, cars and workplaces.

It will be appreciated that the examples of interactions given represent only a few of a large possible number of possibilities of local interactions between user equipment and real world objects.

WO2009/11305 describes a mobile communication device identifier comprising a shielding which defines a coverage area. The shielding is arranged to attenuate radio signals originating externally to the coverage area to be less than a predetermined signal strength within the coverage area. The identifier also comprises an antenna and transceiver operable to communicate with a mobile device inserted within the coverage area using a signal strength greater than the predetermined signal strength.

US2009/0233583 describes a system for enabling secure payment using a mobile telecommunication device and existing communication protocols. In embodiments, a mono-cell system described includes a faraday cage or a barrier of conductive material to reduce the intensity of signals received from external to the barrier and/or to reduce the intensity of signals from the mono-cell outside the cage.

EP 1424861 describes a method and apparatus for identifying a mobile phone user. The mobile phone.is shielded from the surrounding telephone network once inserted into a reader.

EP 1742170 describes a method for recognising mobile objects, based on triggering mobile units on the mobile objects to transmit radio codes. Universal units transmit radio signals over a limited range, and within that range the radio signals continuously or periodically trigger the mobile units to transmit radio codes characteristic of a particular mobile unit.

It is desired to provide a user equipment detector to enable such interactions.

### SUMMARY

A first aspect provides a user equipment identification detector for use in a wireless telecommunication network, the user equipment being operable to communicate with network nodes provided in the wireless telecommunication network,

The detector comprising:
a proximity sensor, operable to detect placement of the user equipment within a predetermined detection region;
an interrogation unit, operable to request an indication of identity from the user equipment detected in the predetermined detection region and communicate the indication of identity to a user equipment identification unit, said interrogation unit being operable to detect ambient radio conditions of said wireless telecommunications network and select appropriate power settings on which to transmit a pilot signal to communicate with said user equipment in said detection region.

The first aspect recognizes that to reliably provide interactive services between user equipment and a real world object, it is required that the local interactions between user equipment and real world objects are not triggered by the passing of user equipment nearby and that only user equipment that wishes to download, or otherwise have access to real world content, is arranged to receive information from the real world object.

The first aspect provides a reliable detector having a proximity sensor and an interrogation unit, for example, a cellular short range sensor and corresponding architecture, that enables a detector to reliably detect a mobile phone within a predetermined volume of space and which allows the co-existence of real world interactions with macro cellular networks whilst re-using the same frequency resources by minimising disturbance to those networks. Such an approach allows the existing cellular network infrastructure to be complemented without significant disruption and enables new services to be offered based upon local interactions between user equipment and real world objects.

The first aspect recognises that interactions between the detector and user equipment may advantageously be limited to a small region within a larger geographic area served by, for example, a macro or femto base station. The coverage region of a detector according to the first aspect extends typically only a few centimetres around the detector.

The first aspect recognises that by providing a proximity sensor, operation of the detector may be restricted to situations in which the proximity sensor detects user equipment within a relevant region. The interrogation unit only operates to request an identifier when user equipment is detected by the proximity sensor within the relevant region. Unwanted interactions with user equipment remote from the detector may thus be minimized.

In one embodiment, the proximity sensor is operable to activate the interrogation unit on detection of placement of the user equipment within the predetermined detection region.

Accordingly, the interrogation unit may be inactive until user equipment is determined to be close enough for any interaction to take place. Such an arrangement restricts possible interactions with user equipment merely passing the detector.

Furthermore, such an arrangement allows hardware of the interrogation unit to be turned off until user equipment is detected by the proximity sensor, allowing energy savings. Such an arrangement may be particularly useful if the detector is operating on a limited power supply, for example, a battery or other power cell.

In one embodiment, the proximity sensor is operable to measure a change in a measurable quantity attributable to placement of said user equipment within said predetermined detection region.

Accordingly, the proximity sensor may monitor a measurable quantity and monitor for a predetermined change in that quantity, the change being attributable to the physical placement of user equipment in the immediate vicinity of the detector.

In one embodiment, the proximity sensor is operable to periodically repeat the measurement. Accordingly, by repeating measurement and thus repeating detection steps periodically, measurements from a proximity sensor may be used to check that user equipment remains in the detection region of the detector. The detector may, for example, require that a change in measurable quantity is measured to be substantially constant over a predetermined period before it determines that user equipment is present in the detection region and it reports detection. The proximity sensor may operate to monitor the status of detection over a period of time, thereby to determine whether user equipment remains detected, thus indicating whether communication between the detector and the user equipment may be established or, when established, continue.

In one embodiment, the proximity sensor comprises a capacitive sensor. In one embodiment, the proximity sensor comprises a pressure sensor. In one embodiment, the proximity sensor comprises an infra red beam sensor. Various detection mechanisms may be utilized, each programmed to report detection when a set of criteria indicating that user equipment has entered the predetermined region has been met.

In one embodiment, the interrogation unit comprises an antenna, operable to communicate with the user equipment within a predetermined coverage region.

Accordingly, the detector may establish a radio link with said user equipment, thereby allowing communication with the user equipment in the same manner as communication between a typical wireless communication network and user equipment.

In one embodiment, the predetermined coverage region and the predetermined detection region substantially correlate. Accordingly, the interrogation unit is substantially operable to interact and communicate only with those user equipment determined to be within the range of the proximity sensor. Such an arrangement helps to minimize unwanted user equipment interaction and minimizes overall disruption to a macrocell in a wireless communication network.

In one embodiment, the interrogation unit is operable to detect ambient radio conditions and adjust power settings of a radio channel transmitted by the antenna in accordance with detected ambient radio conditions. Accordingly, the detector may be operable to select a radio frequency or channel in accordance with the wireless communication network within which it is placed.

In one embodiment, the interrogation unit is operable to detect ambient radio conditions and select a transmission frequency or channel to be transmitted by the antenna in accordance with detected ambient radio conditions. Accordingly, by detecting the radio condition of the surrounding wireless communication network, the detector can select appropriate power settings on which to transmit a pilot channel to communicate with user equipment in the detection or coverage region. If the detector is located in a wireless communication network close to a base station it may be necessary for the detector to transmit at high power to be "heard" above a macro base station transmission.

In one embodiment, the interrogation unit is operable to detect ambient radio conditions and transmit a jamming signal on one or more radio frequencies to disrupt communication with user equipment on those frequencies. Accordingly, depending on the location of the detector within in a wireless communication network, the detector may sense surrounding radio conditions and be operable to jam signals from the surrounding network from reaching user equipment located within the detection and/or coverage regions. Such a jamming signal allows the detector to communicate with user equipment located in the detection and coverage zones effectively, allowing the detector to be "heard" above transmissions occurring in the surrounding wireless telecommunications network.

In one embodiment, the strength of the jamming signal is determined in accordance with detected ambient radio conditions.

In one embodiment, the antenna comprises a directive antenna operable to provide coverage within the predetermined coverage region and poor coverage outside the region. Accordingly, interference can be minimised and interactions with user equipment and the detector closely controlled.

In one embodiment, the antenna comprises a coil antenna. In one embodiment, the antenna comprises a patch antenna. In one embodiment, the antenna comprises a transmission line. The transmission line may be terminated by an appropriately matched load. Such antenna are typically substantially planar and therefore can be easily included in a substantially planar detector. Such detectors allow user equipment to be easily pressed against them. A planar component allows other planar components, such as a user interface touch screen, or appropriate proximity sensor, to be assembled into a compact unit.

In one embodiment, the indication of identity comprises said user equipment IMSI. User equipment IMSI already operates as a unique identifier for user equipment in a wireless telecommunications network. Use of that identifier allows a greater depth of already available information about an end user to be utilized. Use of IMSI may allow user data to be pulled in from other databases on a network, such that the interaction between a real world object and the user equipment can be targeted to a specific end user.

In one embodiment, the interrogation unit is operable to initiate a user equipment camping procedure. Accordingly, the interrogation unit is operable to transmit a location address which differs from the macro cell in which the detector is located. When user equipment is in the coverage region of the interrogation unit and the interrogation unit is active, and thus transmitting a pilot signal including such a location address, the user equipment detects the pilot including the "new" location address. The user equipment initiates a known "camping" procedure during which the interrogation unit asks the user equipment for an identity, typically the user equipment IMSI. The camping procedure typically operates such that user equipment can obtain a good communication link with the wireless network, so if user equipment finds itself to be receiving a pilot channel with a reasonable signal strength (for example, from the detector) the camping procedure may be used to communicate with user equipment.

In one embodiment, the interrogation unit is operable to terminate the initiated camping procedure before completion of the camping procedure. Accordingly, user equipment with which the interrogation unit is communicating does not attach itself to the detector, which itself cannot provide network services to the user equipment. Use of the camping procedure causes short term disruption to the network operation of user equipment, since the macrocell may not, for a short period of time, whilst the camping procedure is being utilized by the detector, be operable to send or receive user data. Termination of the camping procedure ensures that any disruption is minimized.

In one embodiment, user equipment identification detector comprises the user equipment identification unit. For example, in one embodiment, the user equipment identification unit is integrally formed with the detector. Accordingly, the detector may have an internal look-up unit from which to identify user equipment. That arrangement may reduce latency in response, which may be advantageous in some interactions, for example, opening a door in response to user equipment. Maintaining an internal database of user equipment identities which meet the door-opening criteria ensures the door is opened promptly.

In one embodiment, the interrogation unit further comprises a cellular transceiver, operable to communicate with a wireless telecommunications network including the user equipment identification unit. In one embodiment, the interrogation unit further comprises a wired backhaul connector operable to communicate with a wireless telecommunications network including the user equipment identification unit. The user equipment identification unit may be located remote to the detector.

Accordingly, the detector may be operable to communicate with a typical macrocell network, or similar, and the user equipment indicator of identity is communicated from the detector to the network. The identification unit may be provided on the network. Such an arrangement allows the detector to be relatively simple in operation and construction, and allows information about an end user associated with user equipment to be accumulated from a variety of sources within a network. Furthermore, passing the identifier through the network allows a range of responses to be implemented in response to detection of user equipment, for example, the sending of a SMS message, billing the end user via user equipment charges, sending information at a later time or date, that information being sent directly from the macrocell network, rather than the detector itself.

A second aspect provides a method of detecting and identifying user equipment in a wireless telecommunication network, the user equipment being operable to communicate with network nodes provided in the wireless telecommunication network, the method comprising the steps of:
detecting ambient radio conditions of said wireless telecommunications network;
selecting appropriate power settings on which to transmit a pilot signal to communicate with said user equipment in said detection region;
detecting placement of the user equipment within a predetermined detection region;
requesting an indication of identity from the user equipment detected in the predetermined detection region; and
communicating the indication of identity to a user equipment identification unit. In one embodiment, the method further comprises the step of activating the interrogation unit on detection of placement of the user equipment within the predetermined detection region.

In one embodiment, the step of detecting further comprises the step of measuring a change in a measurable quantity attributable to placement of the user equipment within the predetermined detection region.

In one embodiment, the method further comprises the step of periodically repeating the measurement.

In one embodiment, the placement detection is performed by a proximity sensor comprising a capacitive sensor. In one embodiment, the proximity sensor comprises a pressure sensor. In one embodiment, the proximity sensor comprises an infra red beam sensor.

In one embodiment, the step of requesting an indication of identity is performed by an interrogation unit, the interrogation unit comprising an antenna, operable to communicate with the user equipment within a predetermined coverage region.

In one embodiment, the predetermined coverage region and the predetermined detection region substantially correlate.

In one embodiment, the method further comprises the steps of detecting ambient radio conditions and adjusting power settings of a radio channel transmitted by the antenna in accordance with detected ambient radio conditions.

In one embodiment, method further comprises the steps of detecting ambient radio conditions and selecting a transmission frequency or channel to be transmitted by the antenna in accordance with detected ambient radio conditions.

In one embodiment, the method further comprises the steps of detecting ambient radio conditions and transmitting a jamming signal on one or more radio frequencies to disrupt communication with user equipment on those frequencies.

In one embodiment, the method further comprises the steps of determining the strength of the jamming signal in accordance with detected ambient radio conditions.

In one embodiment, the antenna comprises a directive antenna operable to provide coverage within the predetermined coverage region and poor coverage outside the region.

In one embodiment, the antenna comprises a coil antenna. In one embodiment, the antenna comprises a patch antenna. In one embodiment, the antenna comprises a transmission line.

In one embodiment, the indication of identity comprises user equipment IMSI.

In one embodiment, the step of requesting an indication of identity comprises initiation of a user equipment camping procedure.

In one embodiment, the method further comprises the step of terminating the initiated camping procedure before completion of the camping procedure.

In one embodiment, the method further comprises the step of communicating with a wireless telecommunications network including said user equipment identification unit.

In one embodiment, the step of communicating with a wireless telecommunications network is performed using a wired backhaul connector operable to communicate with a wireless telecommunications network including said user equipment identification unit. In one embodiment, a cellular transceiver backhaul is utilized.

A third aspect provides a computer program product operable, when executed on a computer, to perform the method of the second aspect.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings in which:
Figure 1 a is a schematic side elevation of a detector according to one embodiment;
Figure 1b is a schematic front elevation of the detector shown in Figure 1 a;
Figure 2 is a schematic representation of the main components of a detector according to one embodiment;
Figure 3a is a schematic illustration of an antenna for use in one embodiment and a schematic illustration of one embodiment of a detector including such an antenna;
Figure 3b is a schematic illustration of an antenna for use in one embodiment, a schematic illustration of one embodiment of a detector including such an antenna,
and an indication of a possible antenna band of operation;
Figure 3c is a schematic illustration of an antenna for use in one embodiment;
Figure 4 is a schematic illustration of an antenna for use in a further embodiment;
Figure 5 is a schematic illustration of a proximity sensor for use in one embodiment; and
Figure 6 is a schematic illustration of a telecommunications network including a detector according to one embodiment.

### DETAILED DESCRIPTION OF EMBODIMENTS

Wireless telecommunication systems are known. In such systems, user equipment roam through a wireless telecommunications network. Base stations are provided which support areas of radio coverage. A number of such base stations are provided and are distributed geographically in order to provide a wide area of coverage to user equipment. When user equipment is within an area served by a base station, communication may be established between the user equipment and base station over associated radio links. A base station typically supports a number of sectors within the geographical area of service.

It is possible, according to described embodiments, to enable user equipment to interact with real world objects. Due to existing telecommunications networks, provided most of the infrastructure to enable such interactions with real world objects to occur is in place. Use of a user equipment, such as mobile phones, to access interactions with real world objects, is particularly attractive since end users are familiar and comfortable with their mobile telephones.

Examples of possible interactions with real world objects include, for example, convenient payment via mobile phone. Payment can be performed by placing a mobile phone or other similar user equipment on a payment area on a shop counter, for example. Furthermore, after successful payment, an SMS receipt of the transaction may be sent to the user equipment.

Further examples of interactions with real world objects may include allowing user equipment to download real world content by touching the content. For example, it may be possible to download a train timetable directly to user equipment by touching user equipment against a relevant ticket machine or timetable at a train station. The download to the user equipment is triggered by placing the phone on the content; for example, a ticket machine at a railway station. Alternatively, it may be possible to send a link to the timetable via SMS message from where it can then be accessed by a user.

Furthermore, user equipment may be used as a keyless entry system for houses, cars and workplaces.

It will be appreciated that the examples of interactions given above represent a few of a large possible number of possibilities of local interactions between user equipment and real world objects.

To reliably provide such services, it is required that the local interactions between user equipment and real world objects are not triggered by the passing of user equipment nearby and that only user equipment that wishes to download, or otherwise have access to real world content, is arranged to receive information from the real world object.

Embodiments described herein provide a reliable cellular short range sensor and corresponding architecture that enables a detector to reliably detect a mobile and which allows the co-existence of real world interactions with macro cellular networks whilst reusing the same frequency resources. Such an approach allows the existing cellular network infrastructure to be complemented without significant disruption and enables new services to be offered based upon local interactions between user equipment and real world objects.

Embodiments provide a device to detect the close proximity of user equipment to an object, then communicate with the user equipment using a short range user equipment sensor.

In one embodiment, detector includes a proximity sensor component, for example a capacitive sensor, operable to detect whether a potential target device, for example user equipment, is placed against the proximity sensor. If the proximity sensor component detects the presence of user equipment, it operates to activate a short range user equipment sensor, for example, a radio frequency sensing part.

The user equipment (or "cellular") sensor operates to transmit a low power radio frequency pilot signal substantially identical to the type of signal sent by a typical base station provided in a wireless telecommunications network. The pilot signal transmitted by the cellular sensor includes information which sets out a different location area code to the macro cell in which the cellular sensor is located. When user equipment receives the cellular sensor low power pilot signal it triggers a known "camping" procedure with a location area update for user equipment in idle mode within range of the cellular sensor. The signal strength of the low power pilot signal will typically depend upon the location within the macro cell within which the cellular sensor is operating and, in particular, whether it is reusing the same carrier frequency.

The typical range of both the proximity sensor and cellular sensor will substantially overlap and it is particularly useful when the range of those sensors substantially corresponds. The typical range extends a few centimetres in front of the front plate of any such sensor. A directive antenna is preferably provided which can provide good near field and poor far field performance, thereby disrupting other user equipment and the wireless network more generally as little as possible.

Once user equipment is detected by the combined operation of the proximity sensor and cellular sensor, the cellular sensor may operate, for example, using the camping procedure, to request a unique identifier associated with the user equipment. That unique identifier may typically comprise user equipment "IMSI" or "TMSI". It will be appreciated that other indicators may be used. However, use of IMSI or TMSI allows standardised signalling messages to be reused by the cellular sensor of the detector.

To ensure only user equipment which intends to download or interact with the detector communicates with the cellular sensor, the proximity sensor may perform periodic measurements to detect user equipment mobility and thereby prevent any action for user equipment which is not statically placed or substantially statically placed close to the sensor. A possible alternative which does not rely on periodic measurements from the proximity sensor would be to enable the cellular sensor to request a series of channel condition estimates from connected user equipment, thereby detecting whether the user equipment is static on the detector.

If placement of user equipment on the detector is sensed and an identifier from user equipment is received, that identifier may then be used by the real world device to provide information to the user equipment. For example, the identifier may be transmitted to an application server by the detector using either a wireless or wireline backhaul. The application server may be located either inside or outside of an operator's network. The application server may be operable to instruct or send messages in response to reception of the unique identifier associated with user equipment.

Upon receipt of the identifier, the application server obtains user equipment information, for example phone number or account details, stored in an operator's network and can use that information to provide a service such as payment through a phone bill or receipt via SMS, or enable the download of information to user equipment.

Embodiments enable user equipment to interact with real world content. The approach is intended to work essentially seamlessly with existing user equipment and does not require any registration or other set up for an end user. It is envisaged that as a result of the short range and low power operation of a detector, it is able to reuse the same carrier or carriers as existing cellular networks without causing significant interference.

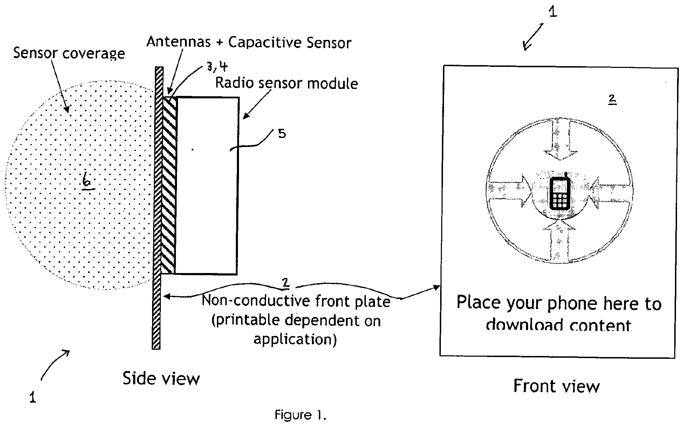

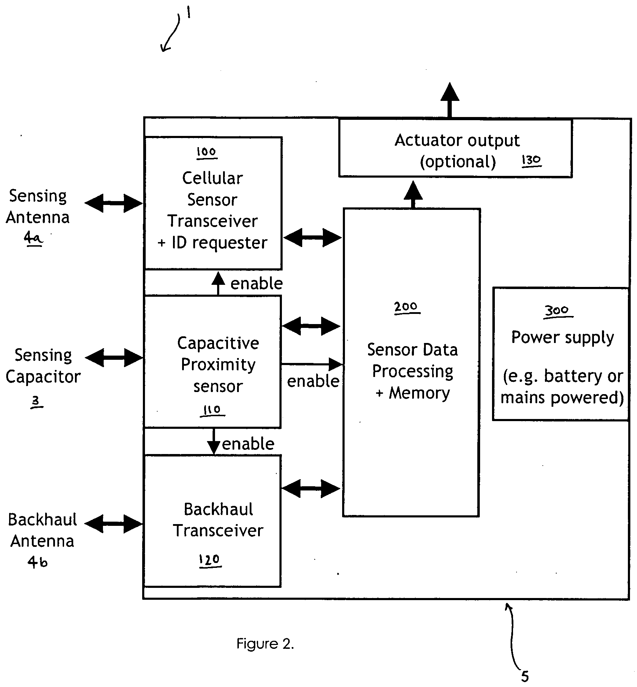

Figure 1a is a schematic side elevation of the detector according to one embodiment and Figure 1b is a schematic front elevation of the detector shown in Figure 1a. The detector 1 shown in Figure 1 comprises a front plate 2 arranged to conceal a proximity sensor 3 and antennae 4. The detector further comprises detector control logic. The operation of detector control logic 5 is described in more detail in relation to Figure 2.

Detector 1 is arranged to have an area of sensor (both proximity and cellular) coverage 6 within which proximity sensor 3 and the cellular sensor antenna 4 associated with detector control logic 5 cover.

Figure 2 is a schematic representation of the main components of a detector according to one embodiment. In particular, Figure 2 illustrates in more detail detector control logic 5. Detector control logic 5 comprises a cellular sensor and mobile ID requester 100 operable, in conjunction with sensing antenna 4a, to transmit pilot signals, perform measurements for pilot power configuration, request a user equipment identifier, for example IMSI, request channel estimates from user equipment and reject a camping attempt. The cellular sensor 100 is operable to communicate with sensing antenna 4a and with detector logic 200 which oversees the operation of the detector.

Detector control logic 5 further comprises a proximity sensing logic 110, for example a capacitive sensor. The capacitive proximity sensing logic 110 communicates with proximity sensor 3, in this case a sensing capacitor, and with detector logic 200. The proximity sensor 3 and associated logic operates to detect whether a potential target device, for example user equipment, is located within sensor coverage area 6.

In the embodiment shown, if a target device is determined by proximity sensing logic to be located within area 6, detector logic 200 operates to activate the other sensor functions. Such an arrangement allows the majority of the processing and transmission of the detector 1 to be switched off for the majority of the time, thereby reducing energy consumption. In addition, proximity sensor logic 110 is able to operate to report periodic capacity measurements made by proximity sensor 3 and thereby determine, in conjunction with detector logic 200, whether user equipment is properly placed on detector 1.

Radio sensing logic 5 further comprises backhaul transceiver 120. In this case, the backhaul transceiver is wireless, for example cellular, such as GSM, and is operable to communicate with backhaul antenna 4 and detector logic 200 to wirelessly transfer the user equipment identifier obtained by sensing antenna 4a in conjunction with cellular sensing logic 100. That identifier is sent via backhaul antenna 4b to a standard wireless network. The information may also be sent via a wired backhaul, for example, ethernet. It is envisaged, that for most applications such a wired backhaul will not be readily available. The user equipment identifier is sent via a standard wireless network to an application server associated with detector 1.

Detector control logic 5 comprises detector logic 200 which is used to control the sensor components and backhaul transmissions. In addition, detector logic 200 may be programmed to perform certain actions in conjunction with an actuator output 130. Detector control logic 5 is thus also operable to send messages or control an actuator when specific user equipment is detected, and backhaul transceiver 120 receives an appropriate message from the wireless network. Actuator output 130 is operable to react to measurements or reply to messages from the application server, for example, to display a confirmation message, switch on a light or control the opening of doors.

Detector control logic 5 further comprises a power supply 300 which supplies detector logic 200, the antennae 4a, 4b, capacitor 3 and units 100, 110, 120, 130 with necessary power.

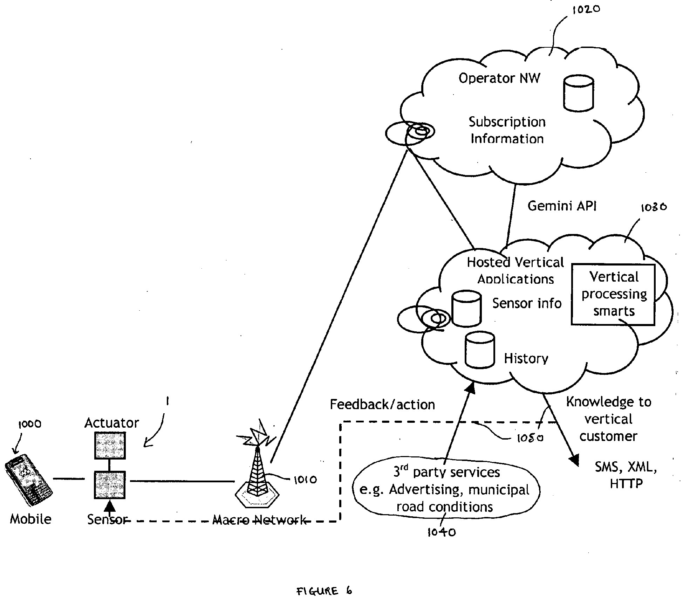

The operation of the detector within a network is described in more detail in relation to Figure 6.

As mentioned previously, a sensing antenna 4a for use in a detector in accordance with embodiments has to ensure operation such that it does not generate a strong far field and which yields a low gain thereby to interact only with user equipment which is located in close proximity of the antenna. In particular, the antenna ought to only be operable within a predetermined sensor area 6. That area may extend only a few centimetres from the surface of plate 2. The best suited antennae for the sensing antenna application are therefore of such a kind that they avoid the radiation or generation of far fields, for example by choosing a sensible mode of operation.

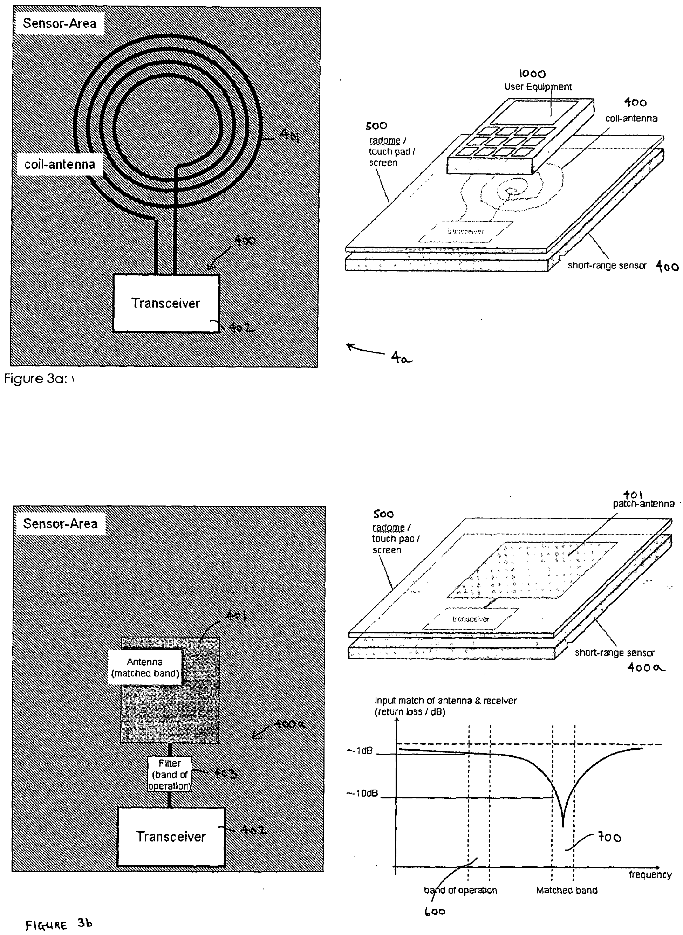

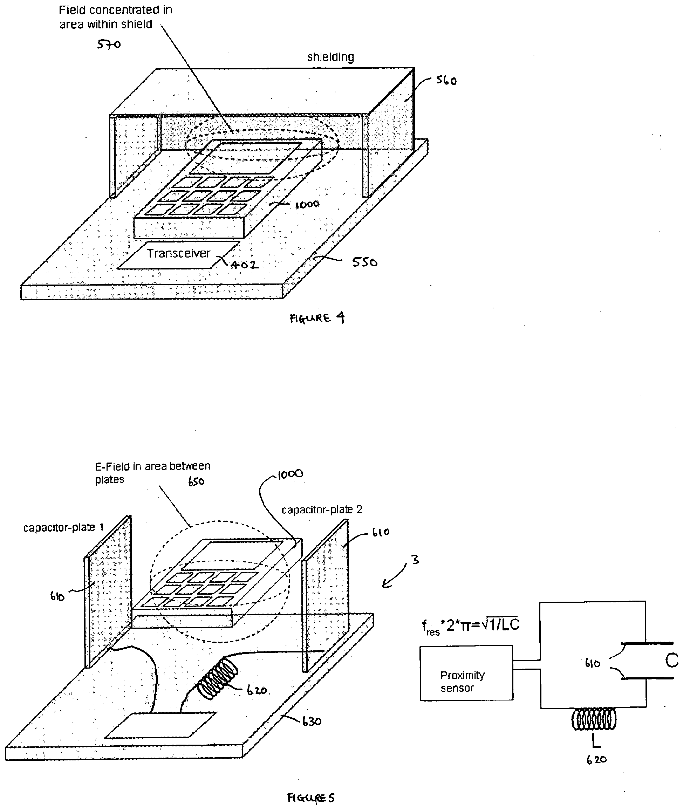

It is possible to choose antenna and deliberately de-tune them, such that the radiation and reception efficiency of the antennae is reduced and only user equipment in close proximity are able to establish a connection with the detector 1. It will also be appreciated that one solution would be to contain the radiation field within a confined space, for example by use of appropriate shielding, thereby restricting the interaction between user equipment and antennae to an area in close proximity of the detector. Various antennae possibilities are described in more detail in relation to Figures 3a-c and Figure 4.

Figure 3a is a schematic illustration of an antenna for use in one embodiment and a schematic illustration of one embodiment of a detector including such an antenna. The antenna 4a comprises a printed circuit coil antenna. Such antenna may also be formed by coiling a wire. The printed circuit coil 400 comprises a coil antenna 401 and a transceiver 402. Printed circuit coils are usually very lossy or can be designed to be deliberately lossy, and thus their gain is inherently low. Printed circuit coils may be operated off resonance, which may also act to reduce the gain and thus any possible interaction with a macro layout of a wireless communication network.

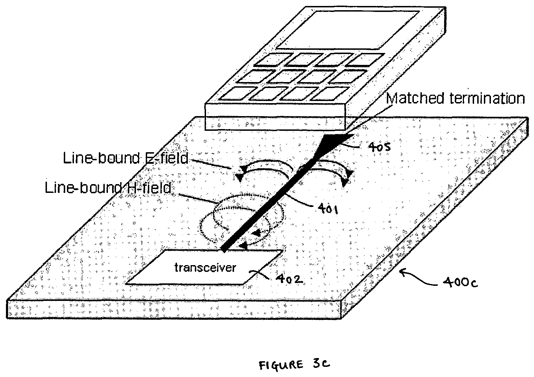

As can be seen from Figure 3a, such antennae are typically flat and can easily be integrated into a touch pad. Figure 3 includes a schematic illustration of some components of one embodiment of a detector including such an antenna. The detector 1 shown comprises a short range proximity sensor (not shown) a cellular sensor comprising a coil antenna 400 and touch pad or screen 500. User equipment 1000 may be easily placed on the flat surface of touch pad 500 such that the coil antenna 400 and proximity sensor can operate. A printed circuit coil antenna can also be placed underneath the touch pad or other input device for further user commands, in a display screen, or beneath a form of proximity sensor.

Figure 3b is a schematic illustration of an antenna for use in one embodiment and a schematic illustration of one embodiment of a detector including such an antenna, together with an indication of a possible antenna band of operation. Reference numerals have been reused as appropriate. Figure 3b illustrates a patch antenna 400a. Patch antenna 400a comprises a transceiver 402, a matched band metal plate antenna 401, and a filter to restrict band of operation 403.

Patch antennae are very flat and can therefore easily be integrated into a sensor. Patch antennas are typically cheap but need to be de-tuned in order to restrict their interaction with the environment, thereby minimising the volume within which user equipment may be able to establish a link with that antenna.

A patch antenna for use as a short range cellular sensor is de-tuned as shown in the graph of Figure 3b, showing a typical band of operation 600 which is deliberately spaced from patch antenna matched band 700. De-tuning such an antenna reduces its gain and enables communication between the detector and user equipment only in the near field. It will be appreciated that such an effect could also be accomplished by sufficiently reducing antenna output power or placing an attenuator between the transceiver 402 and antenna 401.

An attenuator may also be used to de-sensitize the antenna, such that only user equipment within closest proximity of the detector may establish a connection. The mode depicted in Figure 3b has the advantage of avoiding a tuning influence of user equipment placed on a detector, thereby ensuring operation with a wide variety of devices. A filter such as that illustrated as 403 provided between the transceiver 402 and the antenna 401 ensures that blockers or interferers in the matched band do not act to de-sensitize the receiver of the detector.

Furthermore, it will be appreciated that it is possible to use a patch antenna to detect that user equipment is present on a detector and therefore that user equipment may be trying to connect to the detector. Any frequency shift in the band of lower input return loss may be used as a detecting mechanism. It will therefore be understood that a patch antenna may itself be used as a proximity sensor.

Figure 3c is a schematic illustration of an antenna for use in a further embodiment. Figure 3c illustrates an antenna 400c, comprising a transmission line 401, a matched load 405 and a transceiver 402. Transmission line 401 produces line-bound electric and magnetic fields. Connecting transceiver 402 to a length of matched terminated transmission line 401, does not result in the signal transmitted by the transceiver 402 being radiated by an antenna, but it does travel along the transmission line until it is terminated in matched load 405. The field of the travelling wave is tightly bound to line 401 and does not radiate a significant amount of energy into the surrounding environment. As a result, the field associated with the transmission line does not interact with any user equipment which is not in very close proximity of that line.

If user equipment is brought close enough to transmission line 401, for example in the order of millimetres or a few centimetres, then the field generated around the transmission line couples to the user equipment. Since the wave is not radiated, but remains line-bound, the fringing E- and H- fields are only present in very close proximity to the transmission line 401. Thus, it is only possible to generate a significant interaction between user equipment and a terminated transmission line if those two components are very close. Any user equipment device which is placed further away will not be able to couple to the transmission line and therefore will not be able to be sensed by the cellular sensor. Use of a transmission line as shown in Figure 3c may avoid the need for a separate proximity sensor in a detector, since a leaky transmission line provides the functionality of both a proximity sensor and ability to couple on a radio frequency: only user equipment that is placed upon the leaky transmission line will be recognised and the likelihood that passers-by will accidentally couple to any services provided by the detector is consequently low.

Figure 4 is a schematic illustration of an antenna for use in a further embodiment. Sensor plate 550 includes an antenna (not shown), a transceiver 402, and shielding 560. By placing shield 560 over sensor 550, it is possible to ensure that communication between user equipment 1000 and the sensor 550 is only possible within the shield. The field generated by the antenna is concentrated in an area 570 within the shield. The shield 560 acts to attenuate the field of the antenna outside the shield, such that interaction of the detector with the macro cell environment is reduced.

Figure 5 is a schematic illustration of a proximity sensor for use in one embodiment. The proximity sensor 3 shown in Figure 5 comprises a capacitance sensor. The proximity sensor shown in Figure 5 comprises capacitance plates 610 and an inductor 620 mounted on a plate 630. Figure 5 includes a schematic circuit diagram illustrating the component parts of the proximity sensor.

Between capacitor plates 610 an E- field 650 is generated. If user equipment 1000 is placed within the E- field it acts to change the resonance frequency of the capacitor and therefore also the proximity of the detector. Such a detector may also be used to act as an antenna for communication between the sensor and user equipment. Although the capacitor plates 610 are shown vertically, it will be appreciated that they may be arranged horizontally so that they do not project significantly from a front plate 630 of a proximity sensor 3.

Figure 6 is a schematic illustration of a telecommunications network including a detector according to one embodiment. Initial configuration processes will be described, followed by a description of the manner in which a detector may operate within a telecommunication network.

Installation of a detector as shown in Figure 1 within a network requires configuration of that detector. Initial configuration typically comprises two stages. Some operational parameters. Those parameters are specific for each network operator within which the detector is to operate. That provisioning of information can be performed remotely via a cellular backhaul connection provided in the detector. Such a backhaul link is indicated as transceiver 120 in Figure 2. Alternatively, it will be appreciated that the operational parameters may be programmed into the detector control logic 5 of a detector during the manufacturing process in the case where a large number of detectors are produced for a single operator.

The second stage of configuration is to make operation and integration of a detector within a network as simple as possible. Thus the remaining parameters required for a detector to operate are auto-configured based on measurements made at and by the detector.

Provisioned information (information that can be programmed or is sent to a detector by a backhaul transceiver 120) can include, for example, information relating to the carrier frequencies to use for cellular sensing and those carrier frequencies used by the operator network, information relating to which network to use for backhaul, and an address of an application server which hosts the application of interest.

Remaining parameters including detecting the location area code of the macro cell network and allocating a new location area code to the detector to trigger location area updates in user equipment 1000 can be auto-configured. Furthermore, pilot power of the detector may be automatically configured to match target coverage. Pilot power can be calculated based on, for example, the free space path of the measured macro cell pilot power on a carrier used for sensing, antenna gain, and a camping hysteresis threshold.

Detectors according to embodiments operate using user equipment camping attempts. In one embodiment, a detector includes a capacitive proximity sensor such as that shown in Figure 5. If capacitive proximity sensor 3 detects that a potential target user equipment is placed against the detector, it activates the cellular sensing part of the detector, shown schematically in Figure 2 as cellular sensor 100, controlled by detector control logic 5.

Control logic 5 then instructs cellular sensor 100 to transmit a cellular pilot signal having a different location area code to that of the macro cell within which the detector is placed. Transmission of a cellular pilot signal with a different location area code to the macro cell triggers a location update for user equipment in idle mode, thereby allowing the detector to fully detect and identify them. Once user equipment 1000 placed on the detector initiates a camping procedure, it is requested by the detector to send its International Mobile Subscriber Identifier (IMSI) by cellular sensor 100. The IMSI is a unique identifier assigned to each user equipment, which is used to route any call (user equipment generated or user equipment originated) via a traditional route within a wireless communication network. Once detector 1 has obtained user equipment IMSI, the detector can uniquely identify detected user equipment.

Alternatively, a detector could request other temporary identifiers and, in collaboration with the core network and backhaul transceiver 120, identify the mobile uniquely.

Once the IMSI identifier is known, user equipment can be authenticated using the same security mechanisms as employed for standard authenticated user equipment operation. The SIM secure storage device already provided in user equipment and the SIM's established security relationship with an operator's network may therefore be used by the detector. It will be understood that this sequence of events must not result in user equipment 1000 fully updating its location area, since it cannot be fully functionally served by detector 1. Once an IMSI for user equipment has been obtained, the camping procedure is terminated by detector 1.

To prevent unwanted detection of user equipment, for example user equipment which is simply passing a detector, the capacitive sensor 3 may be configured such that it performs multiple measurements over time to determine whether user equipment is properly placed on detector 1 and therefore is not moving. If there is no change in capacity due to the placement of user equipment for a predefined time, the detector can be relatively sure that the user equipment is placed properly on the sensor for that time period.

Alternatively, if cellular sensor 100 is operational, the user equipment with which it has established a connection can be requested to report periodic channel estimates for the channel to the sensor. If user equipment is placed properly on the detector, the channel conditions ought to remain largely constant over a predetermined time interval and the path loss will remain sufficiently low.

If an operator uses multiple carriers, or air interfaces such as GSM and UMTS, different approaches may be possible to ensure that all mobile phones are captured. If multiple carriers or air interfaces are in use, the detector may be operable to transmit pilots and perform the detection process on all of those pilots. Alternatively, the detector may be operable to send a jamming signal which causes user equipment to contact the sensor on a preferred carrier transmitting a pilot signal. The power of the jamming signals is calculated in the same manner as the pilot signal to ensure that coverage is disabled only a few centimetres around the detector.

Figure 6 shows an example of network architecture for use with a detector in accordance with one embodiment. User equipment 1000 is sensed by the detector 1 and its identity is retrieved and relayed to the network via backhaul transceiver 120. In some applications it may be helpful to include some SMARTS in the sensor device itself, for example to reduce latency when opening a door the identity of permitted user equipment keys may be stored within an application server that forms part of the detector itself. That store may be updated by the network when a change to permissions occurs. It will be understood that in such a case, instead of contacting a macrocell wireless network each time, the detector 1 locally looks up its set of securely sourced door keys and unlocks the door if a valid key is present.

In most cases it is anticipated that the detector 1 will connect to the network via an existing cellular network, for example, the nearest macro base station 1010, which acts as a network access point. It will be appreciated that it is possible to use DSL or any other method to get an IP connection to the network.

The user equipment ID (IMSI) obtained from user equipment 1000 is passed through operator network 1020 using standard communication protocols, for example Internet protocol, to an application server 1030. User equipment ID is used to perform a look-up request in the operator network 1020 subscription information databases, for example, to match the user equipment ID against a customer record which may include information regarding the age, payment plan, home address and similar details of the end user. An operator's knowledge of a particular customer may be spread across different databases, for example across billing and customer preference databases. However, it will be appreciated that all feeds can be cross-referenced to construct a deeper picture of a customer and hence produce customer targeted applications.

The operator information provided by operator network 1020 may be processed by a vertical application 1030 in the context of other feeds that exist inside a hosted vertical application server. For example, that server may include historical logs of events and databases storing sensor and actuator characteristics such as the capabilities of the detector and actuator. It will be appreciated that further information from third parties key to application provision may be also pulled in to application server 1030. That further information may be pulled in to application server 1030 by connection to an Internet-hosted web service indicated generally as 1040 in Figure 6. A SMART link may be completed when the vertical application server 1030 produces an output 1050 which is fed back to the detector platform 1 and results in some action, for example confirming payment, opening a door, providing services. In other cases there may be no feedback to the detector platform, and the application server 1030 mat directly feed back using network services to identified user equipment 1000.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A user equipment identification detector (1) for use in a wireless telecommunication network, said user equipment being operable to communicate with network nodes provided in said wireless telecommunication network,
said detector comprising:
a proximity sensor (3), operable to detect placement of said user equipment within a predetermined detection region (6);
an interrogation unit (4), operable to request an indication of identity from said user equipment detected in said predetermined detection region (6) and communicate said indication of identity to a user equipment identification unit,
**characterized in that** said
interrogation unit is operable to detect ambient radio conditions of said wireless telecommunications network and select appropriate power settings on which to transmit a pilot signal to communicate with said user equipment in said detection region, based on said detected ambient radio conditions.

2. A detector according to claim 1, wherein said proximity sensor (3) is operable to activate said interrogation unit (4) on detection of placement of said user equipment within said predetermined detection region (6).

3. A detector according to claim 1 or claim 2, wherein said proximity sensor (3) is operable to measure a change in a measurable quantity attributable to placement of said user equipment within said predetermined detection region (6).

4. A detector according to claim 3, wherein said proximity sensor (3) is operable to periodically repeat said measurement.

5. A detector according to any preceding claim wherein said proximity sensor (3) comprises a capacitive sensor.

6. A detector according to any preceding claim, wherein said interrogation unit (4) comprises an antenna, operable to communicate with said user equipment within a predetermined coverage region.

7. A detector according to claim 6, wherein said predetermined coverage region and said predetermined detection region (6) substantially correlate.

8. A detector according to claim 6 or claim 7, wherein said antenna comprises a directive antenna operable to provide coverage within said predetermined coverage region and poor coverage outside said region.

9. A detector according to any one of claims 6 to 8, wherein said antenna comprises one of: a coil antenna (401), a patch antenna (401), a transmission line (401).

10. A detector according to any preceding claim, wherein said indication of identity comprises said user equipment IMSI.

11. A detector according to any preceding claim, wherein said interrogation unit (4) is operable to trigger a user equipment camping procedure.

12. A detector according to claim 11, wherein said interrogation unit (4) is operable to terminate said initiated camping procedure before completion of said camping procedure.

13. A detector according to any preceding claim, wherein said interrogation unit (4) further comprises a cellular transceiver (5), operable to communicate with a wireless telecommunications network including said user equipment identification unit.

14. A method of detecting and identifying user equipment in a wireless telecommunication network, said user equipment being operable to communicate with network nodes provided in said wireless telecommunication network,
said method comprising the steps of:
detecting ambient radio conditions of said wireless telecommunications network;
selecting appropriate power settings on which to transmit a pilot signal to communicate with said user equipment in said detection region based on said detected ambient radio conditions;
detecting placement of said user equipment within a predetermined detection region;
requesting an indication of identity from said user equipment detected in said predetermined detection region; and
communicating said indication of identity to a user equipment identification unit.

15. A computer program product operable, when executed on a computer, to perform the method of claim 14.

## Patentansprüche

1. Detektor (1) zur Identifikation eines Teilnehmergeräts zur Verwendung in einem drahtlosen Telekommunikationsnetz, wobei das besagte Teilnehmergerät betriebsfähig ist, um mit Netzwerkknoten zu kommunizieren, die in dem besagten drahtlosen Telekommunikationsnetz bereitgestellt sind,
wobei der besagte Detektor Folgendes umfasst:
einen Näherungssensor (3), der betriebsfähig ist, um die Anordnung des besagten Teilnehmergeräts in einer vorausbestimmten Detektionszone (6) zu erkennen;
eine Abfrageeinheit (4), die betriebsfähig ist, um eine Identitätsangabe von dem besagten Teilnehmergerät abzufragen, das in der besagten vorausbestimmten Detektionszone (6) erkannt wurde, und die besagte Identitätsangabe einer Teilnehmergerät-Identifikationseinheit mitzuteilen,
**dadurch gekennzeichnet, dass**
die besagte Abfrageeinheit betriebsfähig ist, um Umgebungsfunkbedingungen des besagten drahtlosen Telekommunikationsnetzes zu erkennen und geeignete Leistungseinstellungen auszuwählen, um anhand derer ein Pilotsignal zu senden, um mit dem besagten Teilnehmergerät in der besagten Detektionszone basierend auf den besagten erkannten Umgebungsfunkbedingungen zu kommunizieren.

2. Detektor nach Anspruch 1, wobei der besagte Näherungssensor (3) betriebsfähig ist, um die besagte Abfrageeinheit (4) nach Erkennung der Anordnung des besagten Teilnehmergeräts in der besagten vorausbestimmten Detektionszone (6) zu aktivieren.

3. Detektor nach Anspruch 1 oder 2, wobei der besagte Näherungssensor (3) betriebsfähig ist, eine Änderung in einer messbaren Menge, die der Anordnung des besagten Teilnehmergeräts in der besagten vorausbestimmten Detektionszone (6) zugeordnet werden kann, zu messen.

4. Detektor nach Anspruch 3, wobei der besagte Näherungssensor (3) betriebsfähig ist, um die besagte Messung periodisch zu wiederholen.

5. Detektor nach einem beliebigen vorhergehenden Anspruch, wobei der besagte Näherungssensor (3) einen kapazitiven Sensor umfasst.

6. Detektor nach einem beliebigen vorhergehenden Anspruch, wobei die besagte Abfrageeinheit (4) eine Antenne umfasst, die betriebsfähig ist, um mit dem besagten Teilnehmergerät in einer vorausbestimmten Abdeckungszone zu kommunizieren.

7. Detektor nach Anspruch 6, wobei die besagte vorausbestimmte Abdeckungszone und die besagte vorausbestimmte Detektionszone (6) im Wesentlichen übereinstimmen.

8. Detektor nach Anspruch 6 oder 7, wobei die besagte Antenne eine Richtantenne umfasst, die betriebsfähig ist, um eine Abdeckung innerhalb der besagten vorausbestimmten Abdeckungszone und eine schwache Abdeckung außerhalb der besagten Zone bereitzustellen.

9. Detektor nach einem beliebigen der Ansprüche 6 bis 8, wobei die besagte Antenne eines aus Folgendem umfasst: eine Spulenantenne (401), eine Patchantenne (401), eine Übertragungsleitung (401).

10. Detektor nach einem beliebigen vorhergehenden Anspruch, wobei die besagte Identitätsangabe die besagte Teilnehmergerät-IMSI umfasst.

11. Detektor nach einem beliebigen vorhergehenden Anspruch, wobei die besagte Abfrageeinheit (4) betriebsfähig ist, um ein Teilnehmergerät-Camping-Verfahren auszulösen.

12. Detektor nach Anspruch 11, wobei die Abfrageeinheit (4) betriebsfähig ist, um das besagte veranlasste Camping-Verfahren vor Abschluss des besagten Camping-Verfahrens zu beenden.

13. Detektor nach einem beliebigen vorhergehenden Anspruch, wobei die besagte Abfrageeinheit (4) weiterhin einen zellularen Transceiver (5) umfasst, der betriebsfähig ist, um mit einem drahtlosen Telekommunikationsnetz einschließlich der besagten Teilnehmergerät-Identifikationseinheit zu kommunizieren.

14. Verfahren zum Erkennen und Identifizieren eines Teilnehmergeräts in einem drahtlosen Telekommunikationsnetz, wobei das besagte Teilnehmergerät betriebsfähig ist, um mit Netzwerkknoten zu kommunizieren, die in dem besagten drahtlosen Telekommunikationsnetz bereitgestellt sind,
wobei das besagte Verfahren folgende Schritte umfasst:
Erkennen von Umgebungsfunkbedingungen des besagten drahtlosen Telekommunikationsnetzes;
Auswählen geeigneter Leistungseinstellungen, um anhand derer ein Pilotsignal zu senden, um mit dem besagten Teilnehmergerät in der besagten Detektionszone basierend auf den besagten erkannten Umgebungsfunkbedingungen zu kommunizieren;
Erkennen der Anordnung des besagten Teilnehmergeräts in einer vorausbestimmten Detektionszone;
Abfragen einer Identitätsangabe von dem besagten Teilnehmergerät, das in der besagten vorausbestimmten Detektionszone erkannt wurde; und
Mitteilen der besagten Identitätsangabe an eine Teilnehmergerät-Identifikationseinheit.

15. Computerprogrammprodukt, das betriebsfähig ist, um bei Ausführung auf einem Computer das Verfahren nach Anspruch 14 durchzuführen.

## Revendications

1. Détecteur d'identification d'équipement d'utilisateur (1) destiné à être utilisé dans un réseau de télécommunication sans fil, ledit équipement d'utilisateur étant exploitable pour communiquer avec des noeuds de réseau pourvus dans ledit réseau de télécommunication sans fil, ledit détecteur comprenant :
un capteur de proximité (3), exploitable pour détecter le placement dudit équipement d'utilisateur à l'intérieur d'une région de détection prédéterminée (6) ;
une unité d'interrogation (4), exploitable pour demander une indication d'identité audit équipement d'utilisateur détecté dans ladite région de détection prédéterminée (6) et communiquer ladite indication d'identité à une unité d'identification d'équipement d'utilisateur, **caractérisé en ce que** ladite unité d'interrogation est exploitable pour détecter des conditions radio ambiantes dudit réseau de télécommunications sans fil et sélectionner des réglages de puissance appropriés sur lesquels émettre un signal pilote pour communiquer avec ledit équipement d'utilisateur dans ladite région de détection, sur la base desdites conditions radio ambiantes détectées.

2. Détecteur selon la revendication 1, dans lequel ledit capteur de proximité (3) est exploitable pour activer ladite unité d'interrogation (4) lors d'une détection de placement dudit équipement d'utilisateur à l'intérieur de ladite région de détection prédéterminée (6).

3. Détecteur selon la revendication 1 ou la revendication 2, dans lequel ledit capteur de proximité (3) est exploitable pour mesurer un changement d'une quantité mesurable attribuable au placement dudit équipement d'utilisateur à l'intérieur de ladite région de détection prédéterminée (6).

4. Détecteur selon la revendication 3, dans lequel ledit capteur de proximité (3) est exploitable pour répéter périodiquement ladite mesure.

5. Détecteur selon l'une quelconque des revendications précédentes, dans lequel ledit capteur de proximité (3) comprend un capteur capacitif.

6. Détecteur selon l'une quelconque des revendications précédentes, dans lequel ladite unité d'interrogation (4) comprend une antenne, exploitable pour communiquer avec ledit équipement d'utilisateur à l'intérieur d'une région de couverture prédéterminée.

7. Détecteur selon la revendication 6, dans lequel ladite région de couverture prédéterminée et ladite région de détection prédéterminée (6) sont sensiblement en corrélation.

8. Détecteur selon la revendication 6 ou la revendication 7, dans lequel ladite antenne comprend une antenne directive exploitable pour fournir une couverture à l'intérieur de ladite région de couverture prédéterminée et une mauvaise couverture à l'extérieur de ladite région.

9. Détecteur selon l'une quelconque des revendications 6 à 8, dans lequel ladite antenne comprend une parmi : une antenne à cadre (401), une antenne à plaque (401), une ligne de transmission (401).

10. Détecteur selon l'une quelconque des revendications précédentes, dans lequel ladite indication d'identité comprend ladite IMSI d'équipement d'utilisateur.

11. Détecteur selon l'une quelconque des revendications précédentes, dans lequel ladite unité d'interrogation (4) est exploitable pour déclencher une procédure de mise en attente d'équipement d'utilisateur.

12. Détecteur selon la revendication 11, dans lequel ladite unité d'interrogation (4) est exploitable pour mettre fin à ladite procédure de mise en attente initiée avant l'achèvement de ladite procédure de mise en attente.

13. Détecteur selon l'une quelconque des revendications précédentes, dans lequel ladite unité d'interrogation (4) comprend en outre un émetteur-récepteur cellulaire (5), exploitable pour communiquer avec un réseau de télécommunications sans fil comprenant ladite unité d'identification d'équipement d'utilisateur.

14. Procédé de détection et d'identification d'équipement d'utilisateur dans un réseau de télécommunication sans fil, ledit équipement d'utilisateur étant exploitable pour communiquer avec des noeuds de réseau pourvus dans ledit réseau de télécommunication sans fil, ledit procédé comprenant les étapes suivantes :
détecter des conditions radio ambiantes dudit réseau de télécommunications sans fil ;
sélectionner des réglages de puissance appropriés sur lesquels émettre un signal pilote pour communiquer avec ledit équipement d'utilisateur dans ladite région de détection sur la base desdites conditions radio ambiantes détectées ;
détecter le placement dudit équipement d'utilisateur à l'intérieur d'une région de détection prédéterminée ;
demander une indication d'identité audit équipement d'utilisateur détecté dans ladite région de détection prédéterminée ; et
communiquer ladite indication d'identité à une unité d'identification d'équipement d'utilisateur.

15. Produit de programme informatique exploitable, lorsqu'il est exécuté sur un ordinateur, pour effectuer le procédé de la revendication 14.
